Europäisches Patentamt

European Patent Office

Office européen des brevets

(11) Publication number: **0 553 390 A1**

## EUROPEAN PATENT APPLICATION

(21) Application number: **92107169.2**

(22) Date of filing: **27.04.92**

(51) Int. Cl.⁵: **G11B 5/64**

(30) Priority: **24.01.92 JP 11247/92**

(43) Date of publication of application:
**04.08.93 Bulletin 93/31**

(84) Designated Contracting States:
**DE FR GB**

(71) Applicant: **NKK CORPORATION**
**1-2 Marunouchi 1-chome, Chiyoda-ku**
**Tokyo(JP)**

(72) Inventor: **Morita, Kenji c/o Pat.& Lic.Dept.,**
**NKK Corp.**
**1-2, 1-chome, Marunouchi**
**Chiyoda-ku Tokyo(JP)**
Inventor: **Kohama, Tatsuya c/o Pat.& Lic.Dept.,**
**NKK Corp.**
**1-2, 1-chome, Marunouchi**
**Chiyoda-ku Tokyo(JP)**
Inventor: **Maeda, Tomoh c/o Pat.& Lic.Dept.,**
**NKK Corp.**
**1-2, 1-chome, Marunouchi**
**Chiyoda-ku Tokyo(JP)**

Inventor: **Okano, Yoko c/o Pat.& Lic.Dept.,**
**NKK Corp.**
**1-2, 1-chome, Marunouchi**
**Chiyoda-ku Tokyo(JP)**
Inventor: **Sakiyama, Toshio c/o Pat.&**
**Lic.Dept., NKK Corp.**
**1-2, 1-chome, Marunouchi**
**Chiyoda-ku Tokyo(JP)**
Inventor: **Suenaga, Hiroyoshi c/o Pat.&**
**Lic.Dept., NKK Corp.**
**1-2, 1-chome, Marunouchi**
**Chiyoda-ku Tokyo(JP)**
Inventor: **Ohmura, Masanori c/o Pat.&**
**Lic.Dept., NKK Corp.**
**1-2, 1-chome, Marunouchi**
**Chiyoda-ku Tokyo(JP)**

(74) Representative: **Sajda, Wolf E., Dipl.-Phys. et**
**al**
**MEISSNER, BOLTE & PARTNER**
**Widenmayerstrasse 48 Postfach 86 06 24**
**W-8000 München 86 (DE)**

(54) **Magnetic disk substrate of titanium.**

(57) A magnetic disk substrate formed of titanium comprises a substrate body of titanium or a titanium alloy. In a diffraction pattern by a symmetrical reflection X-ray diffractometry on the substrate body surface, a ratio of the diffraction peak intensity $I_1$ on the {0001} plane of titanium to the sum of the diffraction peak intensities $I_2$, $I_3$, $I_4$ and $I_5$ on the planes {10$\bar{1}$0}, {10$\bar{1}$1}, {11$\bar{2}$0} and {11$\bar{2}$2}, i.e., the value of $I_1/(I_2 + I_3 + I_4 + I_5)$, is 0.2 or less.

F I G. 1

The present invention relates to a magnetic disk substrate of titanium, used for a magnetic disk capable of a high density recording-reproducing of information.

In recent years, vigorous researches are being made in an attempt to miniaturize a magnetic disk, i.e., to diminish the diameter and thickness of the magnetic disk, and to increase the information recording density of the magnetic disk. In order to achieve the object, it is necessary for the substrate of the magnetic disk to meet requirements in terms of, for example, mechanical strength, flatness, surface roughness and surface hardness. In addition, it is necessary for the magnetic disk substrate to permit formation of a recording medium layer exhibiting satisfactory magnetic properties such as electromagnetic conversion properties.

It was customary to use an aluminum alloy for forming a substrate of a magnetic disk. In recent years, various researches are reported on the use of a titanium substrate in a magnetic disk in place of the aluminum alloy substrate. When it comes to an aluminum alloy substrate, it is difficult to diminish the thickness of the substrate because the aluminum alloy is not satisfactory in its mechanical strength. However, a titanium substrate has a sufficiently high mechanical strength, making it possible to diminish the thickness of the magnetic disk substrate. In addition, titanium is superior to an aluminum alloy in heat resistance. This makes it possible to form a magnetic film on the titanium substrate by means of sputtering under a wide temperature range. It follows that it is possible to improve the characteristics of the magnetic film formed on the titanium substrate.

For example, a magnetic disk substrate formed of a titanium alloy is proposed in Published Unexamined Japanese Patent Application No. 1-112521. In this prior art, a titanium alloy substrate is proposed because the titanium alloy has a high cross sectional hardness. On the other hand, a magnetic disk substrate formed of an $\alpha$-type titanium alloy is proposed in Published Unexamined Japanese Patent Application No. 59-151335. It is proposed in this prior art that a Co-Cr magnetic alloy layer is formed on the $\alpha$-type titanium substrate by means of sputtering so as to prepare a magnetic disk for a vertical magnetic recording. In this prior art, the magnetic alloy layer is formed directly on the titanium alloy substrate without using an underlaying layer formed of, for example, chromium. Further, Published Unexamined Japanese Patent Application No. 2-223017 teaches the idea of using a pure titanium substrate having an average grain size of 30 microns or less. In this prior art, the heat resistance and the mechanical strength of the magnetic disk substrate are improved by suppressing the impurity element content of the substrate. It is also taught that the use of a pure titanium substrate is intended to eliminate enclosures and pits causing deterioration of the surface condition. Still further, Published Unexamined Japanese Patent Application No. 3-224120 teaches that an alloy magnetic layer containing cobalt and chromium as main components is formed on a titanium substrate which is subjected in advance to a texturing treatment such that the titanium substrate has a surface roughness Ra of 20 Å or more. It is taught that the alloy magnetic layer is formed such that the (0002) planes of cobalt are oriented in the circumferential direction of the substrate and have a predetermined segregation structure so as to enable the magnetic film to have an anisotropy in the circumferential direction and, thus, to increase the coercive force of the magnetic film.

However, where a titanium substrate is used in a magnetic disk for an in-plane magnetic recording and a cobalt-system magnetic film is used as a magnetic film of the magnetic disk, the magnetic characteristics of the magnetic film are made non-uniform within a plane, giving rise to a bit error. In this case, the electromagnetic conversion characteristics are made insufficient. It was considered in the past that the difficulty was due to physical defects of the magnetic film such as dropping and depression of the magnetic film. For overcoming the difficulty, it was considered reasonable to improve the surface properties of the substrate in the case of using an aluminum alloy substrate. When it comes to a magnetic disk substrate formed of titanium, however, it is impossible to overcome the above-noted difficulty inherent in the prior art by improving the surface properties of the titanium substrate. As a matter of fact, any of the prior arts referred to previously does not suggest at all how to improve the electromagnetic conversion characteristics of a magnetic disk substrate formed of titanium.

The present invention, which has been achieved in view of the situation described above, is intended to provide a magnetic disk substrate of titanium, which permits suppressing the bit error of the magnetic disk.

According to the present invention, there is provided a magnetic disk substrate of titanium, in which said substrate comprises a substrate body formed of titanium or a titanium alloy, and in a diffraction pattern by a symmetrical reflection X-ray diffractometry on the surface of the substrate body, a ratio $I_1/(I_2 + I_3 + I_4 + I_5)$ is 0.2 or less, where $I_1$ is the diffraction peak intensity on the $\{0001\}$ plane of titanium, and $I_2$, $I_3$, $I_4$ and $I_5$ are diffraction peak intensities of $\{10\bar{1}0\}$ plane, $\{10\bar{1}1\}$ plane, $\{11\bar{2}0\}$ plane and $\{11\bar{2}2\}$ plane of titanium, respectively.

This invention can be more fully understood from the following detailed description when taken in conjunction with the accompanying drawings, in which:

Fig. 1 exemplifies a diffraction pattern by a symmetrical reflection X-ray diffractometry on the surface of a substrate body of a magnetic disk substrate according to one example of the present invention; and

Fig. 2 is a graph showing the relationship between the value of the ratio $I_1/(I_2 + I_3 + I_4 + I_5)$ and a bit error rate.

As a result of an extensive research on the cause of a bit error which takes place in the case of using titanium substrate, the present inventors have found that the bit error is derived from the crystallinity of titanium, not from the physical defect of the titanium substrate, and proposed previously in Japanese Patent Application No. 3-151683 (not disclosed) the formation of an amorphous or fine crystalline anodic oxide film on the surface of a titanium substrate so as to prevent the magnetic film from being affected by the crystallinity of the titanium substrate. The present inventors also proposed previously in Japanese Patent Application No. 3-153362 (not disclosed) that an underlaying film of at least two chromium layers should be formed beneath a magnetic film so as to improve the noise characteristics, i.e., to increase the S/N ratio, of the magnetic disk. Even if such an underlying film is formed, however, the magnetic film tends to be somewhat affected by the crystallinity of the titanium substrate so as to bring about a bit error problem. Such being the situation, it is necessary to further suppress the bit error occurrence.

The present inventors have further continued the research on the basis of the finding described above, and have found that the bit error occurrence can be suppressed to a negligible level by controlling the crystal orientation on the surface of the substrate body of a magnetic disk substrate so as to form a predetermined texture, arriving at the present invention.

To be more specific, titanium has a crystal structure of hcp. Concerning the lattice constant, a-axis is 2.95 Å long, and c-axis is 4.69 Å long. Cobalt also has a crystal structure hcp. Concerning the lattice constant, a-axis is 2.51 Å long and c-axis is 4.07 Å long. Since titanium and cobalt have the same crystal structure and are relatively close to each other in the lattice constant, the crystal direction of cobalt tends to be affected by the crystal direction of titanium in the case where a cobalt-system magnetic film is formed on a titanium substrate.

For example, where the {0001} plane of the titanium crystal of a titanium substrate is parallel with the substrate surface, in which the c-axis of the titanium crystal is perpendicular to the substrate, the crystal arrangement of the underlying film formed on the surface of the titanium substrate becomes similar to that of the substrate. Also, it is highly possible that the cobalt crystal arrangement of a magnetic film formed on the underlying film is affected by the underlying film, with the result that the {0001} plane of the cobalt crystal becomes parallel with the surface of the magnetic film. In general, where the direction of c-axis, which is a easy magnetization axis, is perpendicular to a plane in a cobalt-system magnetic film, the magnetic characteristics within the plane tend to be degraded, leading to a bit error occurrence.

Likewise, where the c-axis of the titanium crystal is in parallel with the substrate surface, the cobalt crystal arrangement within the magnetic film tends to be affected by the direction of the c-axis of the titanium crystal, with the result that the c-axis of the cobalt crystal is in parallel with the surface of the magnetic film. In this case, it is considered reasonable to understand that the readily magnetizable axis of the crystal of the cobalt-system magnetic film tends to be parallel with a plane and, thus, is adapted for the in-plane recording.

In view of the tendencies described above, it is considered reasonable to understand that a magnetic film is made more adapted for the in-plane magnetic recording with increase in the crystals arranged such that the c-axis is positioned closer to parallel with the substrate surface. To be more specific, the crystal planes of {10$\bar{1}$0}, {10$\bar{1}$1}, {11$\bar{2}$0}, and {11$\bar{2}$2} are parallel with the c-axis or make a relatively small angel with the c-axis (i.e., close to parallel with the c-axis). In other words, a magnetic film is made more adapted for the in-plane magnetic recording with increase in the crystals arranged such that the crystal planes of {10$\bar{1}$0}, {10$\bar{1}$1}, {11$\bar{2}$0} and {11$\bar{2}$2} are parallel or substantially parallel with the substrate surface. Naturally, it is desirable to decrease the crystals arranged such that the {0001} plane of the crystal is substantially parallel with the substrate surface. It follows that the bit error noted above can be suppressed by using a titanium substrate satisfying the requirements described above.

In the present invention, which has been achieved on the basis of the technical idea described above, a symmetrical reflection X-ray diffractometry is employed for the evaluation of the crystal orientation. To be more specific, the ratio of the diffraction pattern intensity $I_1$ of the {0001} plane to the sum of the diffraction pattern intensities $I_2$, $I_3$, $I_4$ and $I_5$ on the crystal planes of {10$\bar{1}$0}, {10$\bar{1}$1}, {11$\bar{2}$0} and {11$\bar{2}$2}, respectively, i.e., the value of $I_1/(I_2 + I_3 + I_4 + I_5)$, is calculated in the present invention in respect of the diffraction pattern by a symmetrical reflection X-ray diffractometry on the surface of a titanium substrate so as to determine whether the titanium substrate is adapted for use as a substrate of a magnetic disk. In the symmetrical reflection X-ray diffractormetry, the crystal plane parallel with a plane of the magnetic disk substrate facilitates diffraction of the X-ray. It follows that, if the c-axis of the titanium crystal is parallel with the plane within the magnetic disk substrate, the X-ray is strongly diffracted at each of the crystal planes $\{10\bar{1}0\}$, $\{10\bar{1}1\}$, $\{11\bar{2}0\}$ and $\{11\bar{2}2\}$. On the other hand, the X-ray is strongly diffracted at the (0001) plane if the c-axis of the titanium crystal is perpendicular to the plane of the magnetic disk substrate.

In order to obtain a titanium plate adapted for use in a magnetic disk, i.e., a titanium plate having the above-noted crystal orientation adapted for the inplane recording, it is desirable for the titanium plate to have a substrate body having a small value of the diffraction peak ratio of $I_1/(I_2 + I_3 + I_4 + I_5)$ in a diffraction pattern by a symmetrical reflection X-ray diffractometry on the surface. If the peak ratio is 0.2 or less, the probability of the bit error occurrence can be sufficiently suppressed to fall within an allowable range.

A titanium substrate for a magnetic disk comprising a substrate body having a peak ratio $I_1/(I_2 + I_3 + I_4 + I_5)$ of 0.2 or less can be obtained by properly controlling the manufacturing conditions such as the rolling conditions and the heat treating conditions of the raw material of the magnetic disk substrate.

In the present invention, the substrate body included in the titanium substrate for a magnetic disk may be formed of a pure titanium or a titanium alloy. Also, the titanium substrate of the present invention may comprise a titanium oxide film formed on the surface of the substrate body. It is desirable to employ an anodic oxidation method for forming the titanium oxide surface film on the substrate body.

Examples

Prepared were substrate bodies of titanium substrates for magnetic disks having a diameter of 3.5 inches. In preparing these substrate bodies, the conditions such as the hot rolling conditions, cold rolling conditions, heat treating conditions and components of the substrate bodies were controlled in various fashions to enable the prepared substrate bodies to exhibit various crystal orientation properties. The raw materials of pure titanium and Ti-6Al-4V alloy were used for preparing the substrate bodies.

The surface of each of the substrate bodies thus prepared was subjected to a texturing treatment, followed by forming an oxide film on the surface of some of the substrate bodies by means of an anodic oxidation treatment so as to prepare a magnetic disk substrate. The maximum surface roughness $R_{max}$ of the substrates was controlled to fall within a range of between 0.059 and 0.061 micron. Also, the thickness of the anodic oxide film was controlled to fall within a range of between 100 and 2,000 Å.

In the next step, a non-magnetic underlying film was formed on the substrate, followed by forming a magnetic film on the underlying film by means of sputtering technique so as to prepare a magnetic disk. The undercoat film was formed of a chromium-based material, and the thickness of the underlying film was controlled to fall within a range of between 500 and 2,500 Å. In Example 10, however, the underlying film was of a two layer structure consisting of a titanium layer in direct contact with the substrate and a chromium layer formed on the titanium layer in a thickness of 1500 Å. The magnetic film included in the magnetic disk was formed of a cobalt-based magnetic alloy, i.e., Co84-Cr14-Ta2, adapted for an in-plane recording-reproducing in a thickness of 400 Å or 750 Å.

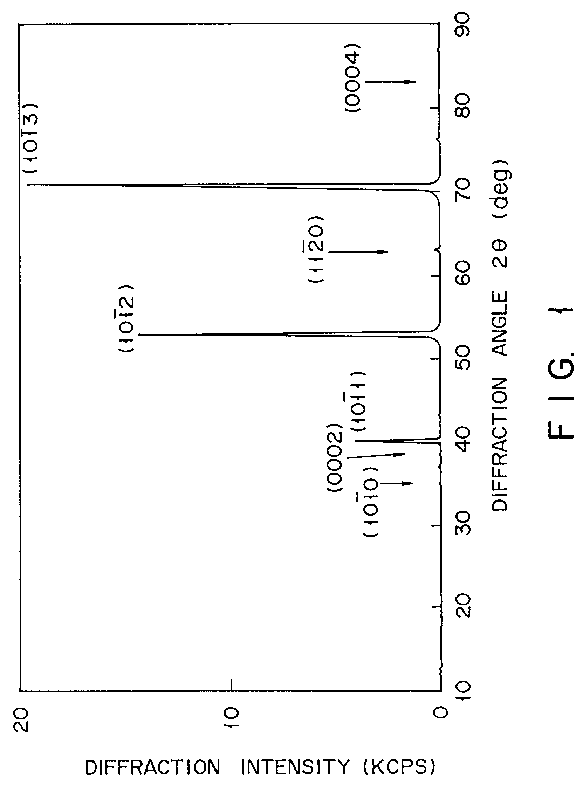

Table 1 shows the materials and the crystal orientation properties of the substrate body, and the thickness of the anodic oxide film, as well as the kind and thickness of each of the undercoat film and the magnetic film. The crystal orientation properties were denoted by the diffraction peak ratio $I_1/(I_2 + I_3 + I_4 + I_5)$ in a diffraction pattern by a symmetrical reflection X-ray diffractometry on the surface of the substrate body. To be more specific, the diffraction peak ratio was determined by measuring the integrated intensity of the diffraction peaks measured by the continuous scanning integrated intensity method with the slit set at 1° and the scanning speed set at 0.5°/min. The integrated intensity of the diffraction peak noted above was measured with respect to each of the crystal planes noted above by using a copper linear bulb as an X-ray generation source and a scintillation counter as a counter means. Fig. 1 shows the diffraction pattern thus obtained. It is shown in Fig. 1 that the peak of (0002) plane along appears as the {0001} plane. However, the peak of (0004) plane appears in some cases. In this case, the sum of the peak intensities of (0002) and (0004) planes is used as the diffraction peak intensity $I_1$.

Examples 1 to 14 shown in Table 1 fall within the technical scope of the present invention. On the other hand, Controls 1 to 8 shown in Table 1 do not fall within the technical scope of the present invention.

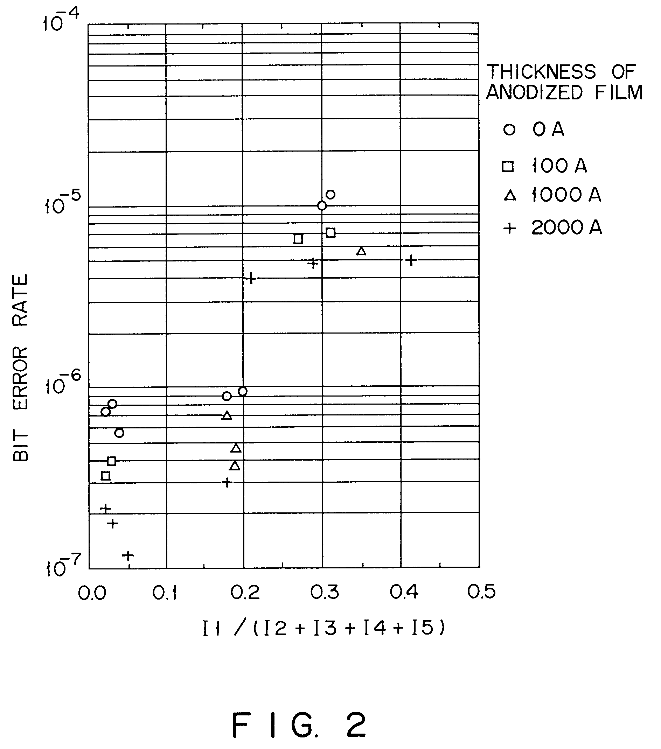

A bit error was evaluated with respect to each of these magnetic disk samples. For evaluating the bit error, recording was performed for each magnetic disk under the conditions of TPI: 1800 and BPI: 45000. The missing pulse errors in which the slice level was set at 70% were measured as a bit error by using a certifier so as to determine the probability of the bit error occurrence, i.e., bit error rate. Incidentally, the rotation speed of the magnetic disk was set at 3600 rpm. The floating height of the magnetic head during the rotation of the magnetic disk was 0.1 micron. Table 1 also shows the results. Further, the relationship between the diffraction peak ratio $I_1/(I_2 + I_3 + I_4 + I_5)$ and the bit error rate is shown in Fig. 2.

5

Table 1

EP 0 553 390 A1

| | | Material | Diffraction peak ratio | Thickness of anodic oxidation film (Å) | Underlying film | | Magnetic film thickness (Å) | Bit error ($\times 10^{-6}$) |
|---|---|---|---|---|---|---|---|---|
| | | | | | Kind | thick-ness(Å) | | |
| Example | 1 | pure Ti | 0.03 | none | Cr | 500 | 400 | 0.82 |
| | 2 | pure Ti | 0.02 | none | Cr | 1000 | 400 | 0.73 |
| | 3 | pure Ti | 0.04 | none | Cr | 2500 | 750 | 0.56 |
| | 4 | pure Ti | 0.18 | none | Cr | 2500 | 750 | 0.88 |
| | 5 | pure Ti | 0.20 | none | Cr | 2500 | 750 | 0.96 |
| | 6 | pure Ti | 0.03 | 100 | Cr | 500 | 400 | 0.40 |
| | 7 | pure Ti | 0.02 | 100 | Cr | 1000 | 400 | 0.33 |
| | 8 | pure Ti | 0.18 | 1000 | Cr | 2500 | 750 | 0.72 |
| | 9 | pure Ti | 0.19 | 1000 | Cr | 2500 | 750 | 0.39 |
| | 10 | pure Ti | 0.19 | 1000 | Ti | 1000 | 750 | 0.47 |
| | | | | | Cr | 1500 | | |

(Continued)

| | | Material | Diffraction peak ratio | Thickness of anodic oxidation film (Å) | Underlying film Kind | Underlying film thickness(Å) | Magnetic film thickness (Å) | Bit error (× 10^{-6}) |
|---|---|---|---|---|---|---|---|---|
| Example | 11 | pure Ti | 0.03 | 2000 | Cr | 500 | 400 | 0.18 |
| | 12 | pure Ti | 0.02 | 2000 | Cr | 1000 | 400 | 0.22 |
| | 13 | pure Ti | 0.05 | 2000 | Cr | 2500 | 750 | 0.12 |
| | 14 | Ti-6Aℓ-4V | 0.18 | 2000 | Cr | 2500 | 750 | 0.30 |
| Controls | 1 | pure Ti | 0.30 | none | Cr | 2500 | 750 | 10.2 |
| | 2 | Ti-6Aℓ-4V | 0.31 | none | Cr | 2500 | 750 | 11.3 |
| | 3 | pure Ti | 0.31 | 100 | Cr | 2500 | 750 | 7.1 |
| | 4 | pure Ti | 0.27 | 100 | Cr | 2500 | 750 | 6.5 |
| | 5 | Ti-6Aℓ-4V | 0.35 | 1000 | Cr | 2500 | 750 | 5.7 |
| | 6 | pure Ti | 0.21 | 2000 | Cr | 2500 | 750 | 4.0 |
| | 7 | pure Ti | 0.29 | 2000 | Cr | 2500 | 750 | 4.8 |
| | 8 | Ti-6Aℓ-4V | 0.41 | 2000 | Cr | 2500 | 750 | 4.9 |

As apparent from Table 1 and Fig. 2, the error rate was sufficiently low in terms of the practical use of the magnetic disk in any of Examples 1 to 14 in which the diffraction peak ratio $I_1/(I_2 + I_3 + I_4 + I_5)$ was 0.2 or less. On the other hand, the error rate was high in Controls 1 to 8 in which the diffraction peak ratio $I_1/(I_2 + I_3 + I_4 + I_5)$ was larger than 0.2. As a matter of fact, the bit error rate in these Control cases was about 10 times as high as those of the Examples of the present invention corresponding to the Control cases in terms of the conditions of the anodic oxidation.

As described above in detail, it is absolutely necessary to define the crystal orientation properties of the substrate body to fall within the the scope specified in the present invention in order to markedly diminish the bit error.

**Claims**

1.  A magnetic disk substrate formed of titanium, in which said substrate comprises a substrate body of titanium or a titanium alloy, and in a diffraction pattern by a symmetrical reflection X-ray diffractometry on the surface of the substrate body, a ratio $I_1/(I_2 + I_3 + I_4 + I_5)$ is 0.2 or less, where $I_1$ is the diffraction peak intensity on the (0001) plane of titanium, and $I_2$, $I_3$, $I_4$ and $I_5$ are diffraction peak intensities of (1010) plane, (1011) plane, (1120) plane and (1122) plane of titanium, respectively.

2.  The magnetic disk substrate formed of titanium according to claim 1, which further comprises a titanium oxide film formed on the surface of the substrate body.

3.  The magnetic disk substrate formed of titanium according to claim 2, characterized in that said titanium oxide film is an anodic oxidation film.

4.  The magnetic disk substrate formed of titanium according to claim 3, characterized in that said anodic oxidation film has a thickness falling within a range of between 100 Å and 2000 Å.

F I G. 1

THICKNESS OF
ANODIZED FILM

○ 0 A
□ 100 A
△ 1000 A
+ 2000 A

BIT ERROR RATE

$I_1 / (I_2 + I_3 + I_4 + I_5)$

F I G. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | 1990 DIGESTS of INTERMAG '90 INTERNATIONAL MAGNETICS CONFERENCE APRIL 17-20, METROPOLE HOTEL BRIGHTON, UK Paper BP-16 MASAAKI FUTAMOTO : 'Growth Process and Microstructure of Highly Oriented Co-Cr Films' * whole document * | 1 | G11B5/64 |
| A | IEEE TRANSACTIONS ON MAGNETICS. vol. 26, no. 5, September 1990, NEW YORK US pages 1614 - 1616 D.J. MAPPS ET AL. 'Very Thin CoCr Films on Titanium Underlayers for High-Density Perpendicular Recording Computer Discs' * page 1614, left column, paragraph 1 * * page 1616, left column, paragraph 2 * | 1 | |
| A,D | PATENT ABSTRACTS OF JAPAN vol. 15, no. 515 (P-1293)27 December 1991 & JP-A-32 24 120 ( MITSUBISHI KASEI CORP ) 3 October 1991 * abstract * | 1 | TECHNICAL FIELDS SEARCHED (Int. Cl.5) G11B |
| A,D | PATENT ABSTRACTS OF JAPAN vol. 13, no. 353 (P-913)8 August 1989 & JP-A-11 12 521 ( SUMITOMO METAL IND LTD ) 1 May 1989 * abstract * | 1 | |

The present search report has been drawn up for all claims

| Place of search | Date of completion of the search | Examiner |
|---|---|---|
| THE HAGUE | 08 DECEMBER 1992 | KLOCKE S. |